# EUROPÄISCHE PATENTSCHRIFT

(11) **EP 0 683 477 B1**
(45) Veröffentlichungstag und Bekanntmachung des Hinweises auf die Patenterteilung: **05.01.2000**
(21) Anmeldenummer: 95107233.9
(22) Anmeldetag: 12.05.1995
(51) Int. Cl.: G08G 1/017, B60R 25/00

(54) **Transponder-Abfragesystem**
Transponder sensing system
Système d'interrogation par répondeur

(30) Priorität: 20.05.1994 DE 4417688
(43) Veröffentlichungstag der Anmeldung: 22.11.1995
(73) Patentinhaber: AEG Identifikationssysteme GmbH, 89077 Ulm (DE); DaimlerChrysler AG, 70567 Stuttgart (DE)
(72) Erfinder: Bloch, Werner, Dipl.-Phys., D-73054 Eislingen (DE); Ehm, Roland, Dipl. -Ing., D-89134 Blaustein (DE); Frühwald, Axel-Michael, Dipl.-Ing., D-70794 Filderstadt (DE); Häutle, Valentin Dipl.-Ing., D-73269 Hochdorf (DE); Hecht, Johannes, Dipl. Phys., D-89233 Burlafingen (DE); Kollbach, Dietbert, Dipl. -Ing., D-73733 Esslingen (DE); Robitschko, Peter Dipl.-Ing., D-71069 Sindelfingen (DE); Schenk, Christian Dr. rer.nat., D-89134 Blaustein (DE); Strobel, Hardy Dipl.-Ing., D-71299 Wimsheim (DE)
(74) Vertreter: Weber, Gerhard

(56) Entgegenhaltungen:
- FR-A- 2 534 205
- FR-A- 2 619 944

## Beschreibung

Die vorliegende Erfindung betrifft ein Transponder-Abfragesystem nach dem Oberbegriff des Patentanspruchs 1.

Einrichtungen zur Identifizierung von Objekten, mit einem Transponder und einem dazugehörigen Lesegerät zum drahtlosen Auslesen der im Speicher des Transponders gespeicherten Information sind z.B. aus der DE-OS 29 19 753 bekannt. Die Verwendung solcher Einrichtungen bei Kraftfahrzeugen zu deren Identifizierung ist daraus ebenfalls bekannt.

Im Hinblick auf eine Zunahme von Eigentumsdelikten einerseits und einer Zunahme der Menge höherwertiger beweglicher Objekte, wie z.B. Kraftfahrzeuge kommt der Erkennung von Eigentumsdelikten eine immer größere Bedeutung zu.

Aus der FR-A-26 19 944 ist ein Verfahren und eine Vorrichtung zur Identifizierung und Lokalisierung von Fahrzeugen bekannt, wobei mit dem Fahrzeug eine auslesbare Speicheranordnung verbunden ist. Der Speicher enthält eine verschlüsselte Information zur Identität des Fahrzeugs sowie eine Zusatzinformation. Die Zusatzinformation kann bei einer Manipulation an einem Identitätskennzeichen des Fahrzeugs verändert werden. Die ausgelesene Speicherinformation wird an eine Überwachungsstelle weitergeleitet und dort mit einer Liste verglichen, welche alle korrekten Speichercodes enthält. Bei einer Abweichung des ausgelesenen Speichercodes von den Listeneinträgen wird auf eine unberechtigte Nutzung des Fahrzeugs geschlossen.

Der vorliegenden Erfindung liegt daher die Aufgabe zugrunde, die Erkennung unerlaubt genutzter Objekte zu erleichtern und zu vereinfachen.

Diese Aufgabe wird durch im Kennzeichen des Patentanspruchs 1 angegebene Merkmale gelöst.

Ein wesentlicher Vorteil der Erfindung wird darin gesehen, daß das durch das Lesegerät überprüfte Objekt zumindest als auffällig erkannt wird, ohne daß z.B. ein Datenvergleich erforderlich ist. Damit ist die beschriebene Einrichtung z.B. bei Fahrzeugen ohne störenden Zeitverlust einsetzbar. So ist feststellbar, daß ein Fahrzeug außergewöhnlich in Benutzung genommen wurde, z.B. durch Manipulationen an der Zündung, an Schlössern oder dergleichen, unabhängig davon, um welches spezielle Fahrzeug es sich handelt. Diese und weitere Feststellungen können dann getroffen werden, wenn das Fahrzeug als auffällig erkannt wurde. Dies ist z.B. von Bedeutung, wenn ein widerrechtlich angeeignetes Fahrzeug über die Grenze gebracht wird, dessen Entwendung noch gar nicht bemerkt wurde.

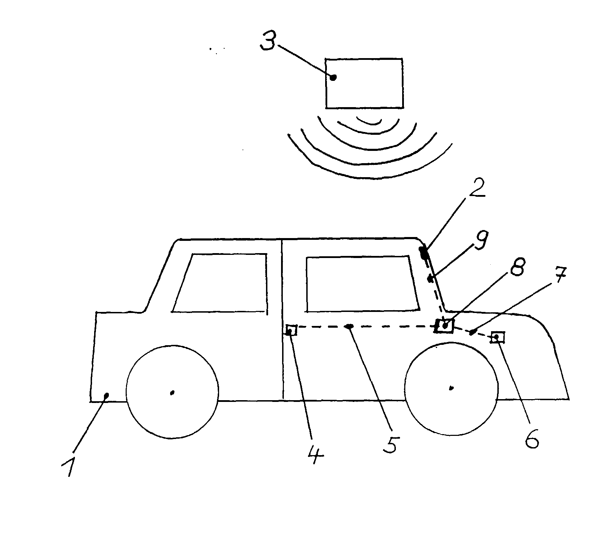

Anhand des in der Figur schematisch beschriebenen Ausführungsbeispiels wird die Erfindung nachfolgend näher erläutert.

Die Figur zeigt ein Kraftfahrzeug 1 mit einem Transponder 2 sowie einem Lesegerät 3, das zu Ermittlungszwecken außerhalb des Fahrzeugs verwendet wird.

Das Lesegerät 3 benutzt in bekannter Weise einen Hochfrequenzenergiesender zur drahtlosen Energieversorgung und Aktivierung des Transponders 2 und einen Empfänger zum Empfang und zur Auswertung des von dem aktivierten Transponder 2 ausgesendeten hochfrequenten Informationssignals.

Der Transponder 2 ist versteckt, zum Beispiel im Befestigungsbereich der Frontscheibe des Fahrzeugs 1 angebracht und über eine oder mehrere Signalverbindungen 5, 7, 9 mit Signalgebern 4, 6 oder einer Codiereinheit 8, in der mehrere Signalgeberleitungen 5, 7 zusammenlaufen verknüpft und zwar in der Weise, daß über diese Signalverbindungen 5, 7, 9 übertragene Signale auslesbare Kennzeichnungen in einem Speicher des Transponders 2 hinterlassen.

Die Signalverbindungen 5, 7, 9 können Drahtleitungen, Lichtwellenleiter oder drahtlose Übertragungsstrecken sein. Die Signalgeber können z.B. elektrische oder elektronische Einrichtungen sein, die bei Fehlbedienungen des Zündkreises, der Schlösser, des Bremskreises, unerklärlichen Neigungsbewegungen des Fahrzeuges, einer Wegfahrsperre usw. Signale abgeben.

Der Transponder kann einen oder mehrere Speicher oder Speicherteile enthalten. Im allgemeinen wird ein Speicher mit den fahrzeugtypischen Daten vorhanden sein, sowie ein weiterer Speicher oder Speicherteil, der von den Signalen der beschriebenen Signalgeber belegt wird.

Wenngleich die Erfindung im Zusammenhang mit einer bevorzugten Anwendung in einem Kraftfahrzeug beschrieben wurde, ist sie auch bei anderen Gegenständen, die nicht unbefugt genutzt werden sollen, wie z.B. Kunstgegenständen und ähnlichem mit Vorteil anwendbar.

## Patentansprüche

1. Transponder-Abfragesystem mit beweglichen Gegenständen (1), welche einen Transponder (2) mit wenigstens einem elektrischen Speicher sowie wenigstens einen mit dem Transponder verbundenen Signalgeber (4,6), der dann eine auslesbare Kennzeichnung in den Speicher einschreibt, wenn eine nicht regelgerechte oder unberechtigte Nutzung des Gegenstands erfolgt, enthalten, und mit Lesegeräten (3) zum drahtlosen Auslesen des Speicherinhalts, dadurch gekennzeichnet, daß der Transponder (2) versteckt an oder in dem Gegenstand (1) angeordnet ist, daß der Transponder drahtlos durch einen Hochfrequenzsender eines Lesegeräts mit Energie versorgbar ist und daß in einem Lesegerät (3) allein aus der genannten Kennzeichnung ohne Datenabgleich von im Lesegerät ggf. verfügbaren zusätzlichen Information über den speziellen Gegenstand eine nicht regelgerechte oder unberechtigte Nutzung erkennbar ist.

2. Abfragesystem nach Anspruch 1, dadurch gekennzeichnet, daß der Transponder (2) einen Speicher oder einen Speicherteil aufweist, der gegenstandspezifische Festkennzeichnungen enthält, die ebenfalls auslesbar sind.

3. Abfragesystem nach einem der Ansprüche 1 bis 2, gekennzeichnet durch die Ausbildung des beweglichen Gegenstands als Kraftfahrzeug mit einer elektronischen Nutzungssperre, die als Signalgeber drahtlos und/oder leitungsgebunden mit dem Transponder verbunden ist.

## Claims

1. Transponder interrogation system with movable objects (1), which contain a transponder (2) with at least one electrical storage device as well as at least one signal transmitter (4, 6), which is connected with the transponder and which writes a readable characterising mark in the storage device when a utilisation of the object which is not in order or is unauthorised takes place and with reading devices (3) for wire-free reading of the content of the storage device, characterised in that the transponder (2) is arranged plugged at or in the object (1), that the transponder can be supplied with energy in wire-free manner through a high-frequency transmitter of a reading device and that a use which is not in order or is unauthorised is recognisable in a reading device (3) solely from the said characterising mark without data comparison of additional information, which in a given case is available in the reading device, about the specific object.

2. Interrogation system according to claim 1, characterised in that the transponder (2) contains a storage device or storage part, which contains fixed characterising marks specific to object and similarly readable.

3. Interrogation system according to one of claims 1 and 2, characterised by construction of the movable object as a vehicle with an electronic use barrier which is connected as a signal transmitter in wire-free and/or conductor-bound manner with the transponder.

## Revendications

1. Système d'interrogation à transpondeur comportant des objets mobiles (1), qui contiennent un transpondeur (2) comportant au moins une mémoire électrique ainsi qu'au moins un générateur de signaux (4, 6), qui est relié au transpondeur et inscrit alors dans la mémoire un indicatif lisible lorsqu'une utilisation non régulière ou non autorisée de l'objet est exécutée, et comportant des appareils de lecture (3) pour une lecture sans fil du contenu de la mémoire, caractérisé en ce que le transpondeur (2) est disposé en étant masqué sur ou dans l'objet (1), que le transpondeur peut être alimenté sans fil en énergie par un émetteur à haute fréquence d'un appareil de lecture et que dans un appareil de lecture (3), une utilisation non régulière ou non autorisée est identifiée dans un appareil de lecture (3) uniquement à partir de l'indicatif indiqué, sans comparaison de données de l'information supplémentaire éventuellement disponible dans l'appareil de lecture et concernant l'objet spécial.

2. Système d'interrogation selon la revendication 1, caractérisé en ce que le transpondeur (2) comporte une mémoire ou une partie de mémoire, qui contient des indicatifs fixes spécifiques à l'objet, qui peuvent être également lus.

3. Système d'interrogation selon l'une des revendications 1 à 2, caractérisé par la réalisation de l'objet mobile sous la forme d'un véhicule automobile comportant un système électronique de blocage empêchant toute utilisation, qui est relié, en tant que générateur de signaux, sans fil et/ou par un fil, au transpondeur.
